# EUROPEAN PATENT SPECIFICATION

(11) **EP 1 068 413 B1**
(45) Date of publication and mention of the grant of the patent: **08.10.2003**
(21) Application number: 99926987.1
(22) Date of filing: 07.04.1999
(51) Int. Cl.: E04F 13/04, E04C 2/32

(54) **USE OF A PLATE, ESPECIALLY A VACUUM FORMED PLATE**
VERWENDUNG EINER PLATTE, INSBESONDERE EINER VAKUUMGEFORMTEN PLATTE
UTILISATION D'UNE PLAQUE, NOTAMMENT D'UNE PLAQUE FORMEE SOUS VIDE

(30) Priority: 08.04.1998 NO 162298
(43) Date of publication of application: 17.01.2001
(73) Proprietor: ISOLA AS, N-3670 Notodden (NO)
(72) Inventor: JOHNSEN, Finn, N-3679 Notodden (NO)
(74) Representative: Müller, Enno, Dipl.-Ing.
(86) International application number: NO9900118
(87) International publication number: WO99055985

(56) References cited:
- DE-A1- 2 650 160
- DE-C2- 3 641 971
- DE-U1- 8 412 830
- US-A- 1 485 370
- US-A- 1 503 783
- US-A- 5 042 569

## Description

### Field of the invention

The invention relates to the use of a plate, particularly a vacuum formed plate, utilizing hollow protrusions or studs in a effective and rational manner.

### Background of the invention

One of the largest limitations with regard to vacuum moulding of plates, especially in relation to injection moulding, lays in the forming of details comprising a undercut or a overhang. With regard to vacuum moulding, it is paramount that all details are formed with a certain release angle, i.e. that attention is paid to the release of the tool shaping the stock, making it at all possible to pull back the tool after the moulding is carried out.

### Prior art

Plates with inverted profiles forming retainment points for the mortar applied to the plate, are known in the art. A plate of this kind is marketed by the German company Schluter and is produced by Ewald Dorken. A common feature of plates of this kind, with inverted trapezoidal profiles, is that the profiles are connected in the perpendicular direction of the plates.

The perpendicular connection of the profiles of the known plates is a result of the applied production method, this method having relatively large limitations. The largest problem lays in the release of the profiles that are formed with undercuts, this being possible only to a limited degree with profiles connected in the longitudinal direction of the production roll. Vacuum shaping normally does not allow a large degree of undercutting without special devices, this especially being true when producing a plate with rounded or square studs with undercuts.

DE 1929878 (Farbwerke Hoechst AG/Breitwieser) shows a mould comprising a cavity with inner walls, the mould simultaneously comprising a relatively soft, protruding core piece by the entrance of the cavity, the mould forming a undercut or a neck portion during the moulding of the material in the mentioned cavity of the mould. The formed material is drawn out of the cavity after moulding. However, in order for the portions in the cavity having a larger diameter than the mentioned neck portion to pass the mentioned protruding square core pieces, said pieces are provided with partition groove slits as shown in fig. 2 of said publication.

In other words this document describes how individual objects are provided by means of an interior mould, e.g. lamp fixtures for ceiling lighting with a basic edge-prismatic shape. A such interior, basic edge shape and prism shape, providing individual objects, cannot automatically be used for providing e.g. foundation walls with several circular, pyramid or cone shaped studs with upper undercuts, or the running production of foundation plates in which several undercut shapes are provided on a production roll.

The French patent publication no. 1 444 070 (Société VALFOR) relates to a known technique whereby a thermoplastic plate is formed on a number of inverse conical moulds made of a flexible material, e.g. crude rubber.

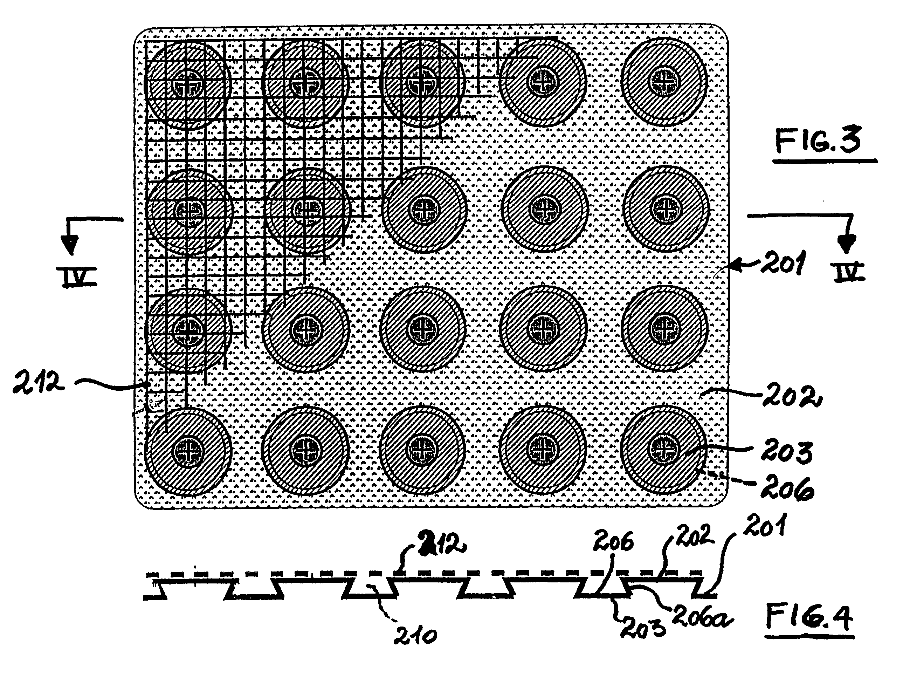

Fig. 4 of the said French publication shows that the mould may be formed as a evenly truncated pyramid or cone, head down, at the same time as each individual mould is fixed to a fixing plate 8 by means of a hollow annular fixing organ.

Thereby, both a plate comprising several hollow protrusions with one or more interior undercut cavities, a tool for providing such a plate, and a method providing such a plate are known. However, the area of applicability for plates provided according to the French publication no. 1 444 070 seems to be different from what is suggested in the present invention, the French publication describing how such plates or pairs of plates with hollow protrusions of somewhat different sizes, are " buttoned" together, with special reference to fig. 7, 8 and 9.

Fig. 13 and 14 of the French publication shows an example of a book cover comprising button-like protrusions and how they by suitable positioning may be buttoned together in order to close the cover around the book.

Said French publication does not show that the heat moulded plates, provided according to the known art, also may be used as plaster plates, the plaster being anchored in the hollow portions of the protrusions, or as a pipe or cable plate for heat emitting floors, or together with a grid provided at the upper portion of the studs, alternatively with a grid being provided at the opposite side of the plate.

DE 29 47 499 B1 (Dorken AG/Agethen) relates to a system for " buttoning " together the joint of two " studded plates" . No indication is given with regard to plates with undercuts, and especially no indication is given of plates provided by means of moulds comprising truncated pyramids or cones being placed head down.

DE 35 12 527 C1 (Klink) relates to a waterproof profile providing a sealing against a wall. The thermoplastic seal may be fixed to a wall by means of mortar, and claim 2 of said publication indicates that the,T-shaped grooves of the profiles are mutually mounted and parallel.

However, this German publication mentions nothing about the actual manufacturing method, nor anything about the use of several hollow protrusions comprising one or more interior hollow undercut cavities.

### Objects of the invention

The object of the present invention is to indicate how to better utilize plates with hollow protrusions, the protrusions forming or being provided with " overhangs" or undercuts in appropriate portions of the respective protrusions.

A further object of the present invention is to indicate how plates provided with such protrusions may gain a more general applicability.

Yet a further object of the present invention is to specifically indicate a tile pavement/plaster plate with several inverted studs or profiles acting as an anchoring for the mortal being applied to the plate, the plate in addition being provided with a suitably incorporated grid, e.g. on one side of several studs.

### Short description of the invention

The objects are reached by means of a plate as indicated in the appended claims 1 - 3.

A plate formed with protrusions comprising overhangs or undercuts will serve well as a plaster plate, in which the anchoring of the plaster is reinforced by the said undercuts, and such plates may also advantageously be used as a base plate for laying pipes and cables for heat emitting floors.

Further advantages and features of the present invention will be apparent from the following disclosure with reference to the appended drawings as well as the appended claims.

### Shot description of the drawings

Fig. 1 shows a section of a first embodiment of a moulding stud included in the manufacture of a plate, the figure showing one step of the moulding process.

Fig. 2 shows a section of the same embodiment as in fig. 1 where the process has reached the release step.

Fig. 3 shows a plan view of a cutaway of a completed plate, e.g. provided by means of the vacuum moulds shown in fig. 1 and 2, whereby the plate is utilized as a plaster plate.

Fig. 4 is a section taken along IV - IV in fig. 3 and shows an example of the positioning of a grid on the plate.

Fig. 5 is a plan view of a cutaway of a further embodiment of a completed plate comprising moulding studs.

Fig. 6 is a section taken along VI - VI in fig. 5 showing how plaster is anchored to the undercut stud portions of the plate.

### Description of embodiments

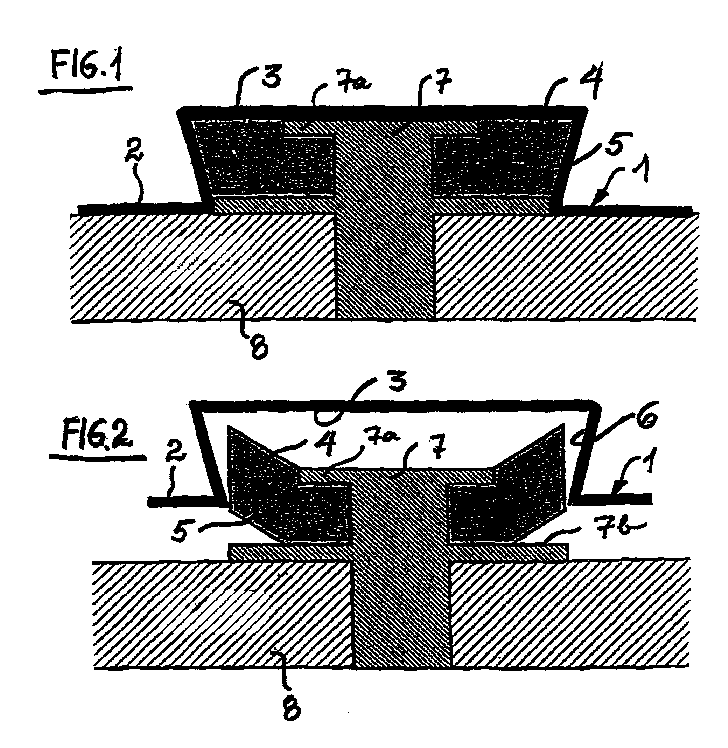

Fig. 1 and 2 show a first embodiment of a moulding stud that may be used for forming a plate according to the present invention. The figures show a section of a plate 1 of ductile material, in particular heat ductile material, in which one or more hollow protrusions 3 are moulded in the main plane 2 by means of vacuum moulding on correspondingly shaped moulding studs 4.

In the example shown in fig. 1 and 2, the moulding stud 4 is shaped as an inversely truncated cone, but any other shape, e.g. an inversely truncated pyramid, is also possible.

In the outset the truncated cone gives a suitable release angel with regard to vacuum moulding, the moulding stud 4 comprising a moulding portion 5 that is stiff enough to withstand pressure during the moulding of said protrusion 3, as shown in fig. 1, but at the same time having a design or comprising such materials making the moulding portion 5 soft enough to be released from the corresponding moulded portion 6 on the protrusion 3, this being indicated in fig. 2, showing the release step during the manufacture of the plate or web 1.

In other words, a moulding portion 5, generally having sufficient stiffness to mould the plate material 1 during the moulding process, is indicated, see fig. 1, exhibiting releasing properties during the release of the moulded cavity surrounding the moulding portion, see fig. 2.

By the embodiment according to fig. 1 and 2, the moulding portion 5 suitably may have the shape of a disc comprising a flexible material, e.g. a rubber or plastics material, the moulding portion 5 being fixed to a fixing organ 7 by means of a suitable upper cone shaped portion 7a with a smaller diameter, and a lower collar shaped portion 7b with a larger diameter. The fixing organ 7 is fixed to the mantle 8 of the moulding tool.

Fig. 3 and 4 show a plan view and a section, respectively, of a small plate and a cutaway of a plate 201 formed as indicated above. The actual plate 201 is formed with hollow protrusions 203 from the main plane 202 of the plate, the protrusions having hollow undercut portions 206 comprising exterior overhangs or undercuts 206a.

The embodiment of the plate 201 shown in fig. 3 and 4 may be used as so called plaster plates, where the undercut hollow portion 206 or exterior overhang or undercut 206a are used for anchoring of the actual plaster 210.

The plate 201 shown in fig. 3 and 4 may appropriately be provided with a grid 212 on a suitable side of the plate, the grid being fixed to the main plane 202 of the plate.

Alternatively, said grid 212 may be fixed to the top of the hollow protrusion 203.

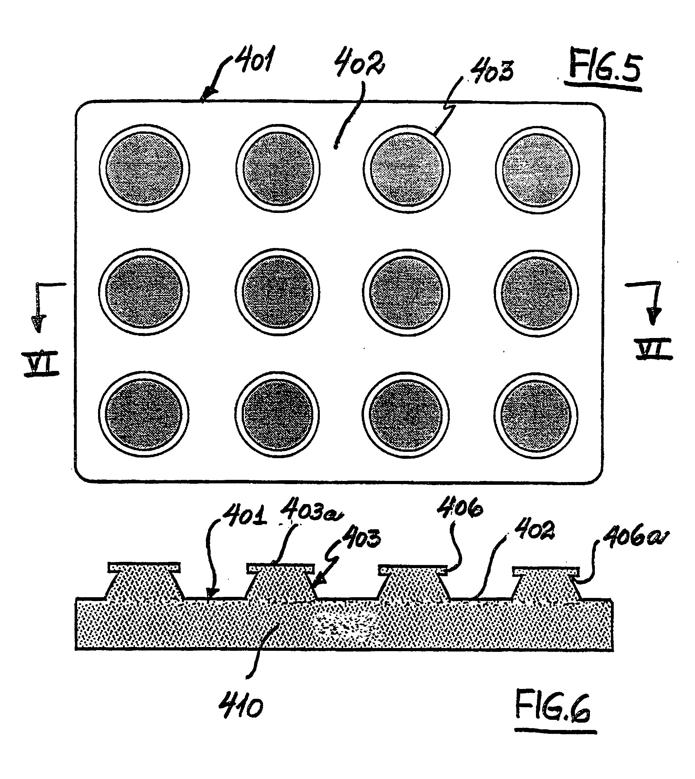

Fig. 5 and 6 shows a plan view and a section, respectively, of a small plate and a cutaway of a plate 401 comprising a different stud profile. The actual plate 401 is formed with hollow protrusions 403 on the main plane 402, the protrusions, at their upper and lower parts, respectively, comprising interior hollow undercut cavities 406, which in turn comprise exterior overhangs or undercuts 406a. With regard to the embodiment shown in fig. 5 and 6, the plate 401 is appropriately used as a so called plaster plate, whereby said hollow, undercut cavities 406 are particularly advantageous for anchoring of the plaster 410.

It is understood that the plate according to fig. 5 and 6 comprise protrusions 403 with substantially flat upper portions 403a, the flat upper portions 403a being provided with overhangs or undercuts 406a. It is further understood that the actual plate 401 is able to receive pressures not only on the main plane 402, but also on the exterior portions 403a, resulting in versatile application of the completed plates.

In addition to being used as a plaster plate, as described with regard to fig. 3, 4; 5, 6, a plate of this kind may advantageously be used as a base when laying pipes and/or cables for heat emitting floors, the spaces between the respective protrusions forming advantageous guiding paths for pipe guides and/or cable guides.

## Claims

1. The use of a plate as a plaster plate (201; 401), the plate is made of a flexible plastic sheet, and is comprising several hollow rounded protrusions (3) formed with one or more interior hollow undercut cavities, the plaster (210; 410) being applied to the outside of the plate, i.e. onto the space where the plate is mounted, at the same time as the plaster is anchored in the cavities of the protrusions.

2. The use of a plate according to claim 1 as a pipe or cable plate for heat emitting floors, the spacing between the respective protrusions comprises suitable guideways for tube guides and/or cable guides.

3. The use of a plate according to claim 1 or 2, in which a upper portion of the protrusions include a grid (202), the grid (212) alternatively being provided on the opposite side of the plate.

## Patentansprüche

1. Verwendung einer Platte als Verputzplatte (201; 401), wobei die Platte aus einem flexiblen Kunststoffplattenteil gebildet ist und mehrere hohle runde Vorsprünge (3) aufweist, die mit einer oder mehreren inneren Hinterschneidungs-Cavitäten geformt sind, wobei das Verputzmaterial (210; 410) auf die Außenseite der Platte aufzutragen ist, d.h. auf den Bereich auf den die Platte montiert ist, zur gleichen Zeit, in welcher sich das Verputzmaterial in den Cavitäten der Vorsprünge verankert.

2. Verwendung einer Platte nach Anspruch 1, als eine Rohrplatte oder eine Kabelplatte für Fußbodenheizungen, wobei ein Abstand zwischen den jeweiligen Vorsprüngen geeignete Führungswege für Rohrführungen und/oder Kabelführungen ergibt.

3. Verwendung einer Platte nach Anspruch oder 2, bei der ein oberer Bereich der Vorsprünge ein Gitter (202) aufweist, wobei das Gitter (212) alternativ auf der gegenüberliegenden Seite der Platte vorgesehen ist.

## Revendications

1. L'utilisation d'une plaque, en tant que plaque d'ancrage de plâtre (201; 401), la plaque est réalisée en une feuille de matière synthétique flexible comprenant plusieurs saillies arrondies creuses (3), formés d'une ou de plusieurs cavités creuses internes en contre-dépouille, le plâtre (201; 410) étant appliqué à l'extérieur de la plaque, c'est-à-dire sur l'espace où la plaque est montée, en même temps que le plâtre est ancré dans les cavités des saillies.

2. L'utilisation d'une plaque selon la revendication 1 en tant que plaque pour des tuyaux ou des câbles pour des planchers chauffants, l'espace entre les saillies respectives comprenant des chemins de guidage appropriés pour des guides de tube et/ou de câble.

3. L'utilisation d'une plaque selon la revendication 1 ou 2, dans laquelle une partie supérieure des saillies comprend une grille (202), la grille (212) étant prévue en variante sur la face opposée de la plaque.
